# DEMANDE DE BREVET EUROPEEN

(11) **EP 0 834 473 A1**
(43) Date de publication de la demande: **08.04.1998**
(21) Numéro de dépôt: 97402250.1
(22) Date de dépôt: 26.09.1997
(51) Int. Cl.: C02F 3/10, C02F 3/34, C02F 3/28

(54) **Activateur biologique pour fosse septique ou équivalent à base d'argile**

(30) Priorité: 02.10.1996 FR 9612009
(71) Demandeur: EPARCO, F-75009 Paris (FR)
(72) Inventeur: Philip, Hervé, 34570 Pignan (FR); Maunoir, Siegfried, 34250 Palavas (FR)
(74) Mandataire: Derambure, Christian

(57) **Abrégé**

L'invention se rapporte à un activateur biologique pour fosse septique ou équivalent comportant un minéral argileux ou une argile gonflés par des cations de sorte que l'activation et la fixation des enzymes naturelles du processus d'activation biologique sont augmentés. L'activateur est en particulier destiné au traitement des boues résiduaires de fosse septique.

## Description

L'invention concerne un activateur biologique pour fosse septique ou équivalent.

On connaît déjà des activateurs biologiques pour fosse septique ou équivalent du type se présentant sous la forme de particules solides d'un produit non corrosif, non toxique, finement divisé, de surface spécifique importante.

On peut se référer à cet égard aux documents FR-A-2 357 490, EP-A-248 709, EP-A-349 441, FR-A-2 659 644.

Bien que les produits conformes aux documents précédemment mentionnés donnent déjà satisfaction, on s'est posé le problème d'augmenter l'efficacité de tels activateurs et notamment de permettre l'obtention du résultat voulu plus rapidement qu'auparavant.

A cet effet, l'invention propose un activateur biologique pour fosse septique ou équivalent du type général précédemment mentionné, se présentant sous la forme de particules solides et comprenant une argile, comprenant en outre un ajout de cations qui peuvent être fixés ou échangés par liaisons ioniques sur l'argile, ayant pour fonction de modifier la structure géométrique des particules d'argile dans le sens de l'écartement de ses feuillets, ayant pour résultat une augmentation de la fixation et de l'activation des enzymes naturelles du processus d'activation biologique.

Un tel activateur biologique comprend également, dans la réalisation considérée, du fer, du cuivre et du zinc de manière que les boues résiduaires provenant du processus d'activation biologique puissent être conformes aux normes actuelles donnant des valeurs maximales en cuivre et en zinc pour de telles boues utilisées en épandage agricole.

L'activateur biologique obéit lui-même à de telles normes.

D'excellents résultats ont été obtenus, avec comme cation ajouté, du calcium ou du magnésium.

D'excellents résultats ont été également obtenus, avec comme cations ajoutés, du calcium et du magnésium.

Le calcium ajouté se présente sous la forme de carbonate de calcium en poudre.

Il peut s'agir par exemple de calcaire broyé ou encore de craie.

En particulier, d'excellents résultats ont été obtenus avec un carbonate de calcium fabriqué à partir de craie, finement divisé, de marque OMYALITE 90 de la société OMYA.

Une telle craie présente des particules dont la structure micro-cristalline est rhomboédrique.

Le magnésium ajouté se présente quant à lui sous forme d'oxyde de magnésium, également en poudre.

Selon un mode de réalisation, l'argile est une argile crue.

D'excellents résultats ont été obtenus avec une argile comprenant de la kaolinite, telle que celle décrite notamment dans les documents FR-A-2 633 607 et FR-A-2 659 644.

D'autres résultats intéressants ont été obtenus avec une kaolinite produite par MINERAIS DE LA MEDITERRANEE S.A. L'analyse chimique de cette kaolinite donne les résultats suivants (les pourcentages sont donnés en poids)

| | |
|---|---|
| SiO₂ | 44,5 |
| Al₂O₃ | 36,5 |
| Fe₂O₃ | 1,1 |
| TiO₂ | 3,5 |
| CaO | 0,6 |
| MgO | 0,03 |
| Na₂O | 0,1 |
| K₂O | 0,03 |

Une telle kaolinite a une densité en vrac de l'ordre de 0,7 kg/dm³.

Une telle kaolinite présente une granulométrie telle que le refus est de 1% maximum à 45 µm et de 0% à 250 µm.

Des résultats également intéressants ont été obtenus avec une argile naturelle constituée d'un mélange d'illite et de kaolinite, dont l'analyse chimique donne les résultats suivants, exprimés en pourcentage en poids :

| | |
|---|---|
| SiO₂ | 18,8 % |
| Al₂O₃ | 13,4 % |
| Fe₂O₃ | 4,9 % |
| TiO₂ | 0,85 % |
| CaO | 13,8 % |
| MgO | 1,2 % |
| Na₂O | 0,2 % |
| K₂O | 2,0 % |

Un activateur biologique conforme à l'invention comporte de l'ordre de 90 à 98% en poids d'argile, pour sa partie active.

le pourcentage pondéral de carbonate de calcium ajouté est compris entre 1 et 8 %.

Le pourcentage pondéral d'oxyde de magnésium ajouté est compris entre 0,1 et 4 %.

Le pourcentage pondéral total de carbonate de calcium et d'oxyde de magnésium ajoutés est compris entre 1 et 9% et plus particulièrement entre 2 et 7%.

Les quantités de fer, de zinc, de cuivre sont, dans une réalisation typique, respectivement de l'ordre de 0,6, 0,11 et 0,05% en poids.

La quantité totale de fer et de zinc peut être comprise, selon l'écart, entre 0,4 et 1,5% en poids.

Les produits qui composent l'activateur biologique sont mélangés de façon intime entre eux.

Un tel activateur est utilisé conformément aux procédures habituelles en la matière.

L'efficacité de l'activateur biologique selon l'invention a pu être démontrée par un test en laboratoire dans lequel on a mesuré la production de méthane.

Les bio-essais en anaérobiose utilisent en effet principalement la production gazeuse comme paramètre caractéristique de la dégradation d'un composé organique.

Pour ce faire, un inoculum bactérien est prélevé dans un écosystème anaérobie, tel qu'une boue résiduaire de fosse septique.

Cet inoculum est placé dans un milieu synthétique de culture contenant des facteurs de croissance tels que des éléments minéraux, des oligoéléments, des vitamines.

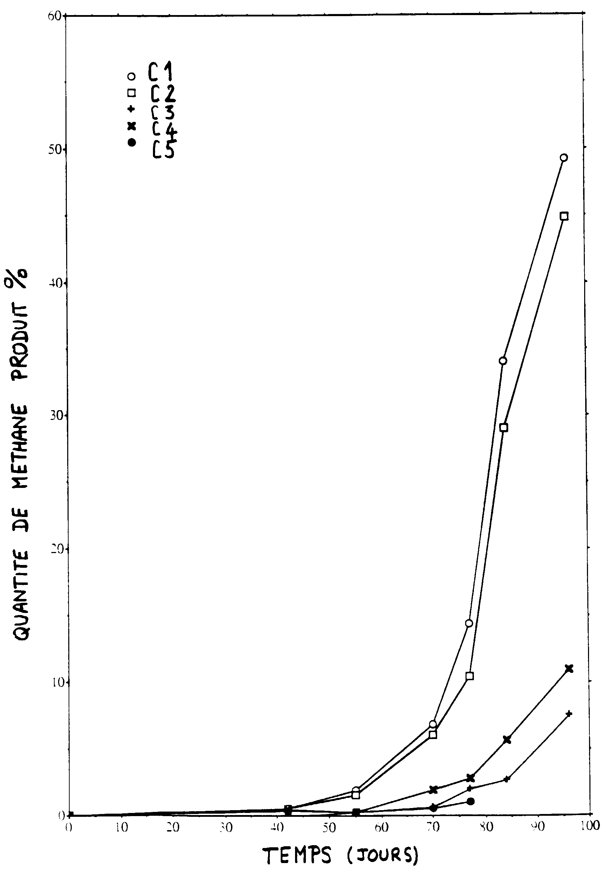

A ce milieu synthétique est ajouté un activateur biologique de l'invention (courbes C1 et C2 de la figure annexée).

Les réacteurs d'étude sont par exemple des flacons en verre de petite contenance, hermétiques, dans lesquels on laisse de 10 à 40% de volume libre.

Des séries de flacons sont placées à température constante.

Au bout d'un certain temps d'incubation, on mesure la production de méthane.

Les flacons tests sont comparés à des flacons témoins ne contenant pas d'activateur biologique.

Les résultats sont donnés sur le graphique annexé.

Les courbes C1 et C2 correspondent à un activateur conforme à l'invention.

Les courbes C3 et C4 correspondent à un activateur classique de l'état de la technique.

Enfin, la courbe C5 correspond à un témoin.

En abscisses sont mentionnés les jours et en ordonnées la quantité de méthane produite.

On constate, par rapport aux activateurs de l'état connu de la technique, que la production de méthane est de l'ordre de quatre à cinq fois supérieure au bout de soixante jours, de l'ordre de cinq fois supérieure au bout de soixante-dix jours et de l'ordre de cinq à six fois supérieure à partir de quatre-vingt jours.

On donne ci-dessous trois formulations différentes de l'activateur biologique selon l'invention avec lesquelles d'excellents résultats ont été obtenus.

Les compositions exprimées en pourcentages pondéraux figurent dans le tableau ci-dessous.

| **Argile** | **Fer** | **Zinc** | **Cuivre** | **CaCO**_{**3**} | **MgO** |
|---|---|---|---|---|---|
| 96,32 | 0,60 | 0,11 | 0,05 | 0 | 2,92 |
| 92,56 | 0,60 | 0,11 | 0,05 | 6,68 | 0 |
| 94,9 | 0,60 | 0,11 | 0,05 | 2,52 | 1,82 |

## Revendications

1. Activateur biologique pour fosse septique ou équivalent du type se présentant sous la forme de particules solides et comprenant une argile, caractérisé en ce qu'il comprend, en outre, un ajout de cations qui peuvent être fixés ou échangés par liaisons ioniques sur l'argile, ayant pour fonction de modifier la structure géométrique des particules d'argile dans le sens de l'écartement de ses feuillets, ayant pour résultat une augmentation de la fixation et de l'activation des enzymes naturels du processus d'activation biologique.

2. Activateur biologique selon la revendication 1, caractérisé en ce qu'il comprend également du fer, du cuivre et du zinc.

3. Activateur biologique selon la revendication 1 ou 2, caractérisé en ce que les cations ajoutés sont du calcium et/ou du magnésium.

4. Activateur biologique selon la revendication 3, caractérisé en ce que le calcium ajouté se présente sous la forme de carbonate de calcium CaCO₃ en poudre.

5. Activateur biologique selon la revendication 3, caractérisé en ce que le magnésium ajouté se présente sous la forme d'oxyde de magnésium MgO en poudre.

6. Activateur biologique selon l'une quelconque des revendications 1 à 5, caractérisé en ce que l'argile est une argile crue.

7. Activateur biologique selon l'une quelconque des revendications 1 à 6, caractérisé en ce que l'argile comprend une kaolinite ou équivalent.

8. Activateur biologique selon l'une quelconque des revendications 1 à 7, caractérisé en ce que l'argile comprend un mélange d'illite et de kaolinite.

9. Activateur biologique selon l'une quelconque des revendications 1 à 8, caractérisé en ce qu'il comporte de l'ordre de 90 à 98% en poids d'argile.

10. Activateur biologique selon l'une quelconque des revendications 1 à 9, caractérisé en ce qu'il comporte de l'ordre de 1 à 8 % en poids de carbonate de calcium.

11. Activateur biologique selon l'une quelconque des revendications 1 à 9, caractérisé en ce qu'il comporte de l'ordre de 0,1 à 4 % en poids d'oxyde de magnésium.

12. Activateur biologique selon l'une quelconque des revendications 1 à 11, caractérisé en ce que le pourcentage pondéral total de carbonate de calcium et d'oxyde de magnésium qu'il comporte est de l'ordre de 1 à 9.

13. Activateur biologique selon la revendication 12, caractérisé en ce que le pourcentage pondéral total de carbonate de calcium et d'oxyde de magnésium qu'il comporte est de l'ordre de 2 à 7.

14. Activateur biologique selon l'une quelconque des revendications 1 à 13, caractérisé en ce que le pourcentage pondéral total de fer et de zinc qu'il comporte est de l'ordre de 0,4 à 1,5.

15. Activateur biologique selon l'une quelconque des revendications 1 à 14, caractérisé en ce qu'il comporte de l'ordre de 0,6% en poids de fer.

16. Activateur biologique selon l'une quelconque des revendications 1 à 15, caractérisé en ce qu'il comporte de l'ordre de 0,11% en poids de zinc.

17. Activateur biologique selon l'une quelconque des revendications 1 à 16, caractérisé en ce qu'il comporte de l'ordre de 0,05% en poids de cuivre.

18. Activateur biologique selon l'une quelconque des revendications 1 à 17, caractérisé en ce qu'il comporte, en pourcentage pondéral, de l'ordre de 96,32 d'argile, 0,60 de fer, 0,11 de zinc, 0,05 de cuivre, 2,92 d'oxyde de magnésium.

19. Activateur biologique selon l'une quelconque des revendications 1 à 18, caractérisé en ce qu'il comporte en pourcentage pondéral, de l'ordre de 92,56 d'argile, 0,60 de fer, 0,11 de zinc, 0,05 de cuivre, 6,68 de carbonate de calcium.

20. Activateur biologique selon l'une quelconque des revendications 1 à 19, caractérisé en ce qu'il comporte en pourcentage pondéral, de l'ordre de 94,9 d'argile, 0,60 de fer, 0,11 de zinc, 0,05 de cuivre, 2,52 de carbonate de calcium et 1,82 d'oxyde de magnésium.
